# FASCICULE DE BREVET EUROPEEN

(11) **EP 4 339 096 B1**
(45) Date de publication et mention de la délivrance du brevet: **27.11.2024**
(21) Numéro de dépôt: 23188485.9
(22) Date de dépôt: 28.07.2023
(51) Int. Cl.: B64C 25/32, B64F 1/00

(54) **AÉRONEF COMPRENANT AU MOINS UN ÉLÉMENT RÉCEPTEUR D'ÉNERGIE AINSI QU'AU MOINS UNE MOTORISATION ÉLECTRIQUE ALIMENTÉE PAR L'ÉLÉMENT RÉCEPTEUR D'ÉNERGIE ET CONFIGURÉE POUR DÉPLACER L'AÉRONEF AU SOL**
FLUGZEUG MIT MINDESTENS EINEM ENERGIEEMPFANGENDEN ELEMENT UND MINDESTENS EINEM ELEKTRISCHEN ANTRIEB, DER VON DEM ENERGIEEMPFANGENDEN ELEMENT VERSORGT WIRD UND SO KONFIGURIERT IST, DASS ER DAS FLUGZEUG AUF DEM BODEN BEWEGT
AIRCRAFT COMPRISING AT LEAST ONE ENERGY-RECEIVING ELEMENT AND AT LEAST ONE ELECTRIC DRIVE SUPPLIED BY THE ENERGY-RECEIVING ELEMENT AND CONFIGURED TO MOVE THE AIRCRAFT ON THE GROUND

(30) Priorité: 15.09.2022 FR 2209265
(43) Date de publication de la demande: 20.03.2024
(73) Titulaire: Airbus (S.A.S.), 31700 Blagnac (FR)
(72) Inventeur: CHASSAIGNE, Didier, 31700 BLAGNAC (FR); CREPEL, Olivier, 31700 BLAGNAC (FR)
(74) Mandataire: Airbus-OPS SAS

(56) Documents cités:
- EP-A2- 3 007 979
- WO-A1-95/29094
- US-A1- 2008 258 014

## Description

### DOMAINE DE L'INVENTION

La présente demande se rapporte à un aéronef comprenant au moins un élément récepteur d'énergie ainsi qu'au moins une motorisation électrique alimentée par l'élément récepteur d'énergie et configurée pour déplacer l'aéronef au sol.

### ÉTAT DE LA TECHNIQUE

Avant son décollage ou après son atterrissage, un aéronef se déplace au sol en roulant sur une voie de circulation d'une installation aéroportuaire entre sa zone de stationnement et la piste de décollage et d'atterrissage. Pour se déplacer au sol, l'aéronef utilise la poussée générée par ses ensembles de propulsion et/ou par son groupe auxiliaire de puissance dit APU (pour « Auxiliary Power Unit » en anglais).

Cette solution n'est pas optimale car l'aéronef consomme de l'énergie sous forme de carburant stocké dans ses réservoirs pour se déplacer au sol, ce qui conduit à augmenter la consommation de carburant et la masse embarquée de l'aéronef.

Le document US2008/258014 divulgue un système de transfert de l'énergie cinétique de l'atterrissage d'un aéronef en énergie électrique récupérable pour ledit aéronef.

Le document EP3007979 divulgue un dispositif pour le déplacement au sol des aéronefs, comportant une piste incluant des bobines de stator et un aéronef solidaire d'un élément tracteur comportant une masse magnétique formée avec un matériau supraconducteur, ainsi qu'un système de contrôle/commande alimentant les bobines de stator de manière à un créer champ magnétique assurant une lévitation de l'élément tracteur au-dessus de la piste. La présente invention vise à remédier à tout ou partie des inconvénients de l'art antérieur.

### RÉSUMÉ DE L'INVENTION

A cet effet, l'invention a pour objet un aéronef comprenant au moins un train d'atterrissage comportant au moins une roue configurée pour rouler au sol lorsque l'aéronef se déplace sur le sol.

Selon l'invention, l'aéronef comprend au moins une motorisation électrique configurée pour entraîner en rotation la roue ainsi qu'au moins un élément récepteur d'énergie configuré pour alimenter la motorisation électrique et coopérer avec un élément émetteur d'énergie présent au sol, les éléments récepteur et émetteur d'énergie formant un dispositif de transfert d'énergie électrique permettant, lorsque l'aéronef se déplace au sol, un transfert d'énergie électrique de l'élément émetteur d'énergie vers l'émetteur récepteur d'énergie. Selon l'invention, l'élément récepteur d'énergie comprend au moins une roulette configurée pour rouler sur le sol et le maintenir à une distance donnée du sol.

Cette solution permet de réduire la masse embarquée et la consommation de carburant de l'aéronef car ce dernier ne consomme plus de carburant pour se déplacer au sol. En outre, la roulette de l'élément récepteur d'énergie permet de maintenir une distance fixe entre l'élément récepteur d'énergie et l'élément émetteur d'énergie au sol, et donc de maintenir un entrefer constant entre les éléments récepteur et émetteur d'énergie.

Selon une autre caractéristique, l'élément récepteur d'énergie est un élément à induction électromagnétique configuré pour générer un courant électrique lorsqu'il est positionné dans un champ magnétique généré par l'élément émetteur d'énergie.

Selon une autre caractéristique, l'aéronef comprend au moins un système de déploiement configuré pour déplacer l'élément récepteur d'énergie entre une position déployée dans laquelle l'élément récepteur d'énergie coopère avec l'élément émetteur d'énergie et une position rétractée dans laquelle l'élément récepteur d'énergie ne génère pas de perturbations aérodynamiques lorsque l'aéronef est en vol.

Selon une autre caractéristique, le système de déploiement comporte un mât présentant une première extrémité reliée par une articulation à une partie de l'aéronef mobile entre des positions déployée et rétractée et une deuxième extrémité reliée à l'élément récepteur d'énergie ainsi qu'au moins un actionneur configuré pour déplacer l'élément récepteur d'énergie entre des première et deuxième positions.

Selon une autre caractéristique, l'élément récepteur d'énergie est solidaire d'une partie de l'aéronef, ladite partie d'aéronef étant mobile entre des positions déployée et rétractée, l'élément récepteur d'énergie étant fixe par rapport à cette partie de l'aéronef mobile.

Selon une autre caractéristique, la motorisation électrique est positionnée au niveau du train d'atterrissage et distincte de la roue, le train d'atterrissage comprenant un système d'accouplement reliant la roue et la motorisation électrique.

Selon une autre caractéristique, la motorisation électrique est intégrée dans la roue à la manière d'un moteur-roue.

### BRÈVE DESCRIPTION DES FIGURES

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef équipé d'un élément récepteur d'énergie illustrant un mode de réalisation de l'invention,
- La figure 2 est une vue de dessus d'une partie d'une installation aéroportuaire équipée d'éléments émetteurs d'énergie illustrant un mode de réalisation de l'invention,
- La figure 3 est une représentation schématique latérale d'une partie d'un train d'atterrissage d'un aéronef comprenant un élément récepteur d'énergie de type sans contact illustrant un mode de réalisation de l'invention,
- La figure 4 est une représentation schématique latérale d'une partie d'un train d'atterrissage d'un aéronef comprenant un élément récepteur d'énergie de type avec contact illustrant un exemple illustratif non revendiqué,
- La figure 5 est une vue en perspective d'une partie d'un train d'atterrissage d'un aéronef comprenant une motorisation électrique et un élément récepteur d'énergie illustrant un mode de réalisation de l'invention,
- La figure 6 est une représentation schématique latérale d'une partie d'un train d'atterrissage illustrant un mode de réalisation de l'invention,
- La figure 7 est une représentation schématique latérale d'une partie d'un train d'atterrissage illustrant un autre mode de réalisation de l'invention,
- La figure 8 est une représentation schématique latérale d'une partie d'un train d'atterrissage illustrant un exemple illustratif non revendiqué, et
- La figure 9 est une représentation schématique latérale d'une partie d'un train d'atterrissage illustrant un exemple illustratif non revendiqué.

### DESCRIPTION DÉTAILLÉE

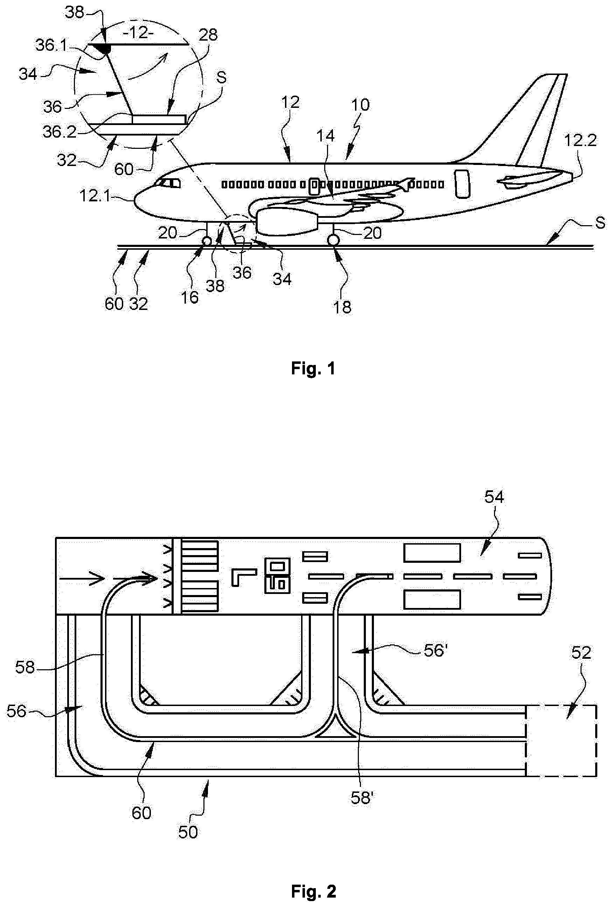

Selon un mode de réalisation visible sur la figure 1, un aéronef 10 comprend un fuselage 12 qui s'étend entre une pointe avant 12.1 et une pointe arrière 12.2, des ailes 14 reliées au fuselage 12, un train d'atterrissage avant 16 relié au fuselage 12 et positionné au niveau ou à proximité de la pointe avant 12.1 ainsi que deux trains d'atterrissage principaux 18 reliés au fuselage 12 ou aux ailes 14.

Chaque train d'atterrissage avant ou principal 16, 18 est mobile entre une position déployée, comme illustré sur la figure 1, et une position rétractée dans une case de train d'atterrissage (non représentée).

Les trains d'atterrissage avant ou principal 16, 18 sont en position déployée lorsque l'aéronef 10 se déplace au sol S et en position rétractée lorsque l'aéronef est en vol, notamment en phase de croisière.

Selon un mode de réalisation, un train d'atterrissage avant ou principal 16, 18 comprend une jambe 20 présentant une première extrémité reliée par une articulation au fuselage ainsi qu'une deuxième extrémité, au moins un support de roue 22 relié à la deuxième extrémité de la jambe 20 et sensiblement perpendiculaire à la jambe 20, au moins une roue 24 montée pivotante sur le support de roue 22 ainsi qu'un actionneur (non représenté) configuré pour faire pivoter la jambe 20 entre les positions déployée et rétractée. Selon une configuration, le train d'atterrissage avant ou principal 16, 18 comprend deux supports de roue 22, 22' qui s'étendent de part et d'autre de la jambe 20 ainsi que deux roues 24, 24' (l'une étant représentée en pointillés) positionnées de part et d'autre de la jambe 20.

Chaque roue 24, 24' comprend une jante 24.1 montée sur le support de roue 22 ainsi qu'un pneumatique 24.2 monté sur la jante 24.1 et présentant une bande de roulement 24.3 en contact avec le sol S lorsque l'aéronef 10 se déplace au sol S.

Le train d'atterrissage avant ou principal 16, 18 n'est pas plus détaillé car il peut être identique à ceux de l'art antérieur. Quel que soit le mode de réalisation, l'aéronef comprend au moins un train d'atterrissage 16, 18 comprenant au moins une roue 24, 24', le train d'atterrissage étant configuré pour occuper une position déployée dans laquelle la roue 24, 24' est en contact avec le sol S et roule sur le sol S lorsque l'aéronef se déplace sur le sol S ainsi qu'une position rétractée dans laquelle la roue 24, 24' n'est pas en contact avec le sol S. L'aéronef 10 comprend au moins une motorisation électrique 26 pour entraîner en rotation au moins une roue 24 d'au moins un train d'atterrissage 16, 18.

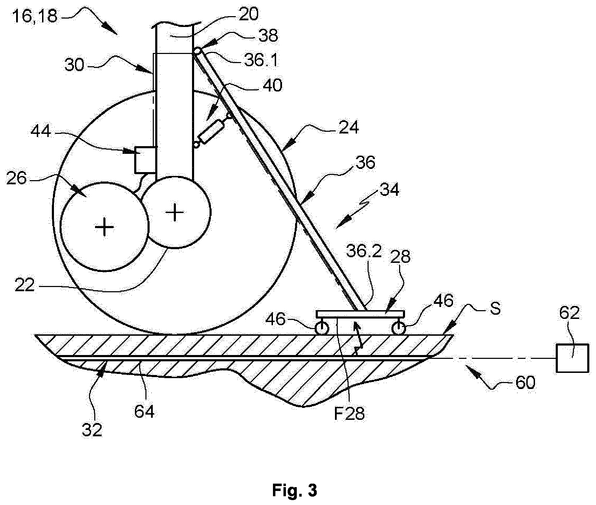

Selon un agencement visible sur les figures 3 à 8, la motorisation électrique 26 est positionnée au niveau du train d'atterrissage 16, 18, à proximité de la deuxième extrémité de la jambe 20, plus particulièrement entre les deux roues 24, 24'. Selon cet agencement, la motorisation électrique 26 est distincte de la roue 24, 24' et le train d'atterrissage 16, 18 comprend un système d'accouplement reliant la roue 24, 24' et la motorisation électrique 26.

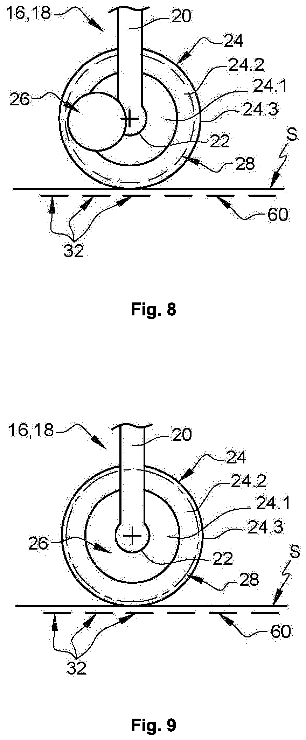

Selon un autre agencement visible sur la figure 9, la motorisation électrique 26 est intégrée dans l'une des roues 24, 24' du train d'atterrissage 16, 18 à la manière d'un moteur-roue.

Selon un mode de réalisation, l'aéronef 10 comprend une unique motorisation électrique 26 accouplée à une ou plusieurs roue(s) 24, 24' ou intégrée dans une roue 24, 24'. En variante, l'aéronef 10 comprend plusieurs motorisations électriques 26 chacune accouplée à une ou plusieurs roue(s) 24, 24' ou intégrée dans une roue 24, 24'. La motorisation électrique 26 peut être indifféremment installée au niveau du train d'atterrissage avant 16 ou d'un des trains d'atterrissage principaux 18.

Selon une caractéristique, l'aéronef 10 comprend au moins un élément récepteur d'énergie 28 relié à au moins une motorisation électrique 26 par une liaison électrique 30 et configuré pour coopérer avec un élément émetteur d'énergie 32 présent au sol S, les éléments récepteur et émetteur d'énergie 28, 32 formant un dispositif de transfert d'énergie électrique permettant, lorsque l'aéronef se déplace au sol S, un transfert d'énergie électrique de l'élément émetteur d'énergie 32 vers l'émetteur récepteur d'énergie 28. Ainsi, l'élément récepteur d'énergie 28 est configuré pour alimenter la (ou les) motorisation(s) électrique(s) 26 en énergie électrique et capter l'énergie électrique présente au sol S lors d'un déplacement de l'aéronef au sol S.

Selon un mode de réalisation, l'élément récepteur d'énergie 28 est configuré pour occuper une première position déployée dans laquelle il coopère avec l'élément émetteur d'énergie 32 et une deuxième position rétractée dans laquelle il est positionné à l'intérieur du fuselage 12 ou les ailes 14 et ne génère pas de perturbations aérodynamiques lorsque l'aéronef est en vol. L'élément récepteur d'énergie 28 est considéré comme coopérant avec l'élément émetteur d'énergie 32 lorsqu'un transfert d'énergie électrique est possible entre les éléments récepteur et émetteur d'énergie 28, 32.

Selon un premier mode de réalisation visible sur la figure 1, l'aéronef 10 comprend au moins un système de déploiement 34 qui comporte un mât 36 présentant une première extrémité 36.1 reliée par une articulation 38 au fuselage 10 ou à une des ailes 14 et une deuxième extrémité 36.2 reliée à un élément récepteur d'énergie 28 ainsi qu'au moins un actionneur configuré pour déplacer l'élément récepteur d'énergie 28 entre les première et deuxième positions.

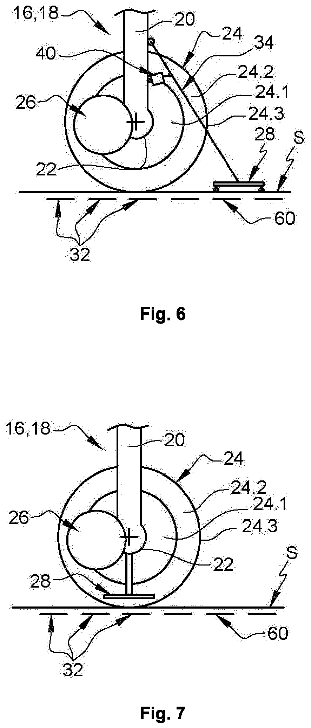

Selon un exemple illustratif non revendiqué visible sur la figure 7, l'élément récepteur d'énergie 28 est solidaire d'une partie de l'aéronef 10 mobile entre des positions déployée et rétractée, comme le train d'atterrissage avant 16 ou principal 18, et fixe par rapport à cette partie de l'aéronef mobile.

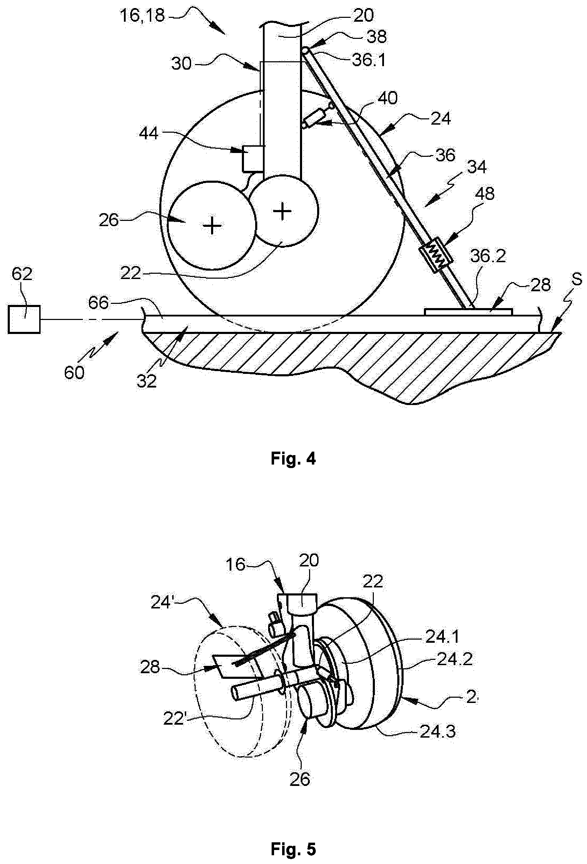

Selon un autre mode de réalisation visible sur les figures 3 et 4, l'aéronef 10 comprend un système de déploiement 34 qui comporte un mât 36 présentant une première extrémité 36.1 reliée par une articulation 38 à une partie de l'aéronef 10 mobile entre des positions déployée et rétractée, comme le train d'atterrissage avant 16 ou principal 18, ainsi qu'une deuxième extrémité 36.2 reliée à l'élément récepteur d'énergie 28. Le système de déploiement 34 comprend également au moins un actionneur 40 configuré pour déplacer l'élément récepteur d'énergie 28 entre des première et deuxième positions.

Quels que soient ces différents modes de réalisation, l'aéronef 10 comprend au moins un système de déploiement 34 configuré pour déplacer l'élément récepteur d'énergie 28 entre des première et deuxième positions. Selon les cas, le système de déploiement 34 peut être dédié à l'élément récepteur d'énergie 28 ou à une autre partie de l'aéronef, comme un train d'atterrissage, à laquelle est relié l'élément récepteur d'énergie 28 ou peut être dédié à l'élément récepteur d'énergie 28 et associé à un autre système de déploiement d'une autre partie de l'aéronef mobile entre des positions déployée et rétractée, comme un train d'atterrissage par exemple.

Selon un mode de réalisation visible sur les figures 3 et 4, l'aéronef 10 comprend un système de traitement 44 de l'énergie électrique, comme un onduleur, entre l'élément récepteur d'énergie 28 et la motorisation électrique 26. L'aéronef 10 peut également comprendre au moins un système de stockage de l'énergie électrique, comme une batterie, entre l'élément récepteur d'énergie 28 et la motorisation électrique 26.

Selon des modes de réalisation visibles sur les figures 3, 5 à 9, le dispositif de transfert d'énergie électrique est de type sans contact. Selon une technologie inductive, l'élément émetteur d'énergie 32 présent au sol S est configuré pour générer un champ électromagnétique et l'élément récepteur d'énergie 28 est un élément à induction électromagnétique configuré pour générer un courant électrique lorsqu'il est positionné dans le champ magnétique généré par l'élément émetteur d'énergie 32. Dans ce cas, l'élément récepteur d'énergie 28 comprend au moins une bobine.

L'élément récepteur d'énergie 28 est distinct de la roue 24, 24' et comprend au moins une surface active F28 en regard du sol S lorsque l'élément récepteur d'énergie 28 est dans la première position déployée, la ou les bobines de l'élément récepteur d'énergie 28 étant positionnées à proximité de la surface active F28. Le nombre et l'agencement des bobines de l'élément récepteur d'énergie 28 sont déterminés de manière à ce que les bobines recouvrent une zone sensiblement égale à la surface active F28.

A titre d'exemple, pour une puissance électrique de l'ordre de 90 KW et un entrefer de l'ordre de 20 mm, la surface active F28 présente une superficie de l'ordre de 10 à 15 dm², ce qui correspond approximativement à un carré de 35 cm de côté. Sur le plan géométrique, l'élément récepteur 28 a la forme d'une plaque d'environ 2 cm d'épaisseur (dimension prise perpendiculairement à la surface active F28).

L'élément récepteur d'énergie 28 comprend au moins une roulette 46 configurée pour rouler sur le sol S lorsque l'élément récepteur d'énergie 28 est dans la première position déployée et le maintenir à une distance donnée du sol S afin de maintenir un entrefer constant entre les éléments récepteur et émetteur d'énergie 28, 32.

Selon d'autres exemples illustratifs non revendiqués visibles sur les figures 8 et 9, l'aéronef comprend plusieurs éléments récepteurs d'énergie 28 intégrés dans la roue 24, 24', plus particulièrement dans la bande de roulement 24.3 du pneumatique 24.2 de la roue 24, 24' et répartis sur la circonférence de la roue 24, 24'. Selon ces modes de réalisation, les éléments récepteurs d'énergie 28 se présentent sous la forme de plaques réparties sur toute la circonférence de la bande de roulement 24.3, plus particulièrement entre les couches de la bande de roulement 24.3.

Selon un autre exemple illustratif non revendiqué visible sur la figure 4, le dispositif de transfert d'énergie électrique est de type avec contact. Selon une configuration, l'élément récepteur d'énergie 28 est un patin, distinct de la roue 24, 24', mobile entre des positions déployée et rétractée, configuré pour être en contact avec l'élément émetteur d'énergie 32 dans la position déployée.

Selon un autre exemple illustratif non revendiqué, l'élément récepteur d'énergie 28 est un patin intégré dans une des roues 24, 24' d'un train d'atterrissage16, 18, qui s'étend sur toute sa circonférence au niveau de sa bande de roulement 24.3.

Selon une configuration, l'aéronef comprend un élément de rappel 48 pour maintenir l'élément récepteur d'énergie 28 en contact avec l'élément émetteur d'énergie 32 à une pression de contact sensiblement constante.

Comme illustré sur la figure 2, une installation aéroportuaire 50 comprend au moins une zone de stationnement 52, au moins une piste de décollage et d'atterrissage 54 ainsi qu'au moins une voie de circulation 56 reliant la zone de stationnement 52 et la piste de décollage et d'atterrissage 54.

Préalablement au décollage, l'aéronef 10 suit une première trajectoire 58 sur une première voie de circulation 56 allant de la zone de stationnement 52 jusqu'à la piste de décollage et d'atterrissage 54. Après son atterrissage, l'aéronef 10 suit une deuxième trajectoire 58' sur une deuxième voie de circulation 56' reliant la piste de décollage et d'atterrissage 54 et la zone de stationnement 54. L'installation aéroportuaire 50 peut comprendre une unique voie de circulation 56 et l'aéronef peut suivre une unique trajectoire 58 entre la zone de stationnement 52 et la piste de décollage et d'atterrissage 54.

L'installation aéroportuaire 50 comprend au moins un système émetteur d'énergie 60 comprenant au moins un élément émetteur d'énergie 32 et au moins une alimentation électrique 62 configurée pour alimenter en énergie électrique l'élément émetteur d'énergie 32.

Selon des modes de réalisation visibles sur les figures 3 et 4, le système émetteur d'énergie 60 comprend un unique élément émetteur d'énergie 32 continue qui s'étend le long de la trajectoire 58.

Dans le cas d'un dispositif de transfert d'énergie électrique de type sans contact visible sur la figure 3, l'élément émetteur d'énergie 32 se présente sous la forme d'un élément électromagnétique 64, comme au moins une bobine, qui s'étend le long de la trajectoire 58. Dans le cas d'un dispositif de transfert d'énergie électrique de type avec contact visible sur la figure 4, l'élément émetteur d'énergie 32 se présente sous la forme d'un rail 66 ou d'un câble conducteur qui s'étend le long de la trajectoire 58.

Selon une première configuration, l'élément émetteur d'énergie 32 est statique et positionné en saillie par rapport au sol S ou affleurant au niveau du sol S.

Selon une autre configuration, l'élément émetteur d'énergie 32 est mobile entre une position rétractée dans laquelle l'élément émetteur d'énergie 32 est positionné en dessous ou au niveau du sol S et une position déployée dans laquelle l'élément émetteur d'énergie 32 est positionné en saillie par rapport au sol S ou au niveau du sol S. Dans ce cas, l'élément récepteur d'énergie 28 peut être fixe par rapport au train d'atterrissage 16, 18.

Selon un autre mode de réalisation, l'installation aéroportuaire 50 comprend un véhicule terrestre supportant l'élément émetteur d'énergie 32 et intégrant l'alimentation électrique 62. Selon cette configuration, l'aéronef 10 et le véhicule terrestre se suivent le long de la trajectoire 58 lorsque l'aéronef 10 se déplace entre la zone de stationnement 52 et la piste de décollage et d'atterrissage 54.

Selon un autre mode de réalisation visible sur les figures 6 à 9, le système émetteur d'énergie 60 comprend une pluralité d'éléments émetteurs d'énergie 32 espacés entre eux et répartis le long de la trajectoire 58. Selon ce mode de réalisation, chaque élément émetteur d'énergie 32 se présente sous la forme d'une plaque comprenant au moins une bobine.

Selon une première configuration, chaque élément émetteur d'énergie 32 est statique. Selon une autre configuration, chaque élément émetteur d'énergie 32 est mobile entre une position déployée dans laquelle il coopère avec l'élément récepteur d'énergie 28 et une position rétractée dans laquelle il ne coopère pas avec l'élément récepteur d'énergie 28.

Le fait qu'un aéronef soit équipé d'au moins un élément récepteur d'énergie 28 ainsi que d'une motorisation électrique 26 alimentée par l'élément récepteur d'énergie 28 configurée pour déplacer l'aéronef au sol S et qu'une installation aéroportuaire 50 soit équipée d'un élément émetteur d'énergie 32 configuré pour former avec l'élément récepteur d'énergie 28 de l'aéronef 10 un dispositif de transfert d'énergie électrique permet de réduire la masse embarquée et la consommation de carburant de l'aéronef car ce dernier ne consomme plus de carburant pour se déplacer au sol. Cela permet également de réduire les émissions sonores et de CO2 sur l'installation aéroportuaire 50.

Selon une configuration, l'installation aéroportuaire 50 comprend un système de guidage automatique des aéronefs circulant sur les voies de circulation 56. Selon cette configuration, les éléments récepteur et émetteur 28 et 32 peuvent assurer une fonction de filoguidage.

## Revendications

1. Aéronef comprenant au moins un train d'atterrissage (16, 18) comportant au moins une roue (24, 24') configurée pour rouler au sol (S) lorsque l'aéronef se déplace sur le sol (S), au moins une motorisation électrique (26) configurée pour entraîner en rotation la roue (24) ainsi qu'au moins un élément récepteur d'énergie (28) configuré pour alimenter la motorisation électrique (26) et coopérer avec un élément émetteur d'énergie (32) présent au sol (S), les éléments récepteur et émetteur d'énergie (28, 32) formant un dispositif de transfert d'énergie électrique permettant, lorsque l'aéronef se déplace au sol (S), un transfert d'énergie électrique de l'élément émetteur d'énergie (32) vers l'émetteur récepteur d'énergie (28), **caractérisé en ce que** l'élément récepteur d'énergie (28) comprend au moins une roulette (46) configurée pour rouler sur le sol (S) et le maintenir à une distance donnée du sol (S).

2. Aéronef selon la revendication 1, **caractérisé en ce que** l'élément récepteur d'énergie (28) est un élément à induction électromagnétique configuré pour générer un courant électrique lorsqu'il est positionné dans un champ magnétique généré par l'élément émetteur d'énergie (32).

3. Aéronef selon l'une des revendications précédentes, **caractérisé en ce que** l'aéronef comprend au moins un système de déploiement (34) configuré pour déplacer l'élément récepteur d'énergie (28) entre une position déployée dans laquelle l'élément récepteur d'énergie (28) coopère avec l'élément émetteur d'énergie (32) et une position rétractée dans laquelle l'élément récepteur d'énergie (28) ne génère pas de perturbations aérodynamiques lorsque l'aéronef est en vol.

4. Aéronef selon la revendication précédente, **caractérisé en ce que** le système de déploiement (34) comporte un mât (36) présentant une première extrémité (36.1) reliée par une articulation (38) à une partie de l'aéronef (10) mobile entre des positions déployée et rétractée et une deuxième extrémité (36.2) reliée à l'élément récepteur d'énergie (28) ainsi qu'au moins un actionneur (40) configuré pour déplacer l'élément récepteur d'énergie (28) entre des première et deuxième positions.

5. Aéronef selon la revendication 3, **caractérisé en ce que** l'élément récepteur d'énergie (28) est solidaire d'une partie de l'aéronef (10) mobile entre des positions déployée et rétractée et fixe par rapport à cette partie de l'aéronef mobile.

6. Aéronef selon l'une des revendications précédentes, **caractérisé en ce que** la motorisation électrique (26) est positionnée au niveau du train d'atterrissage (16, 18) et distincte de la roue (24, 24') et **en ce que** le train d'atterrissage (16, 18) comprend un système d'accouplement reliant la roue (24, 24') et la motorisation électrique (26).

7. Aéronef selon l'une des revendications 1 à 5, **caractérisé en ce que** la motorisation électrique (26) est intégrée dans la roue (24, 24') à la manière d'un moteur-roue.

## Patentansprüche

1. Flugzeug, das mindestens ein Fahrwerk (16, 18) beinhaltet, das Folgendes umfasst: mindestens ein Rad (24, 24'), das dazu konfiguriert ist, auf dem Boden (S) zu rollen, wenn sich das Flugzeug auf dem Boden (S) bewegt, mindestens einen elektrischen Antrieb (26), der dazu konfiguriert ist, das Rad (24) in Drehung zu versetzen, sowie mindestens ein energieempfangendes Element (28), das dazu konfiguriert ist, den elektrischen Antrieb (26) zu versorgen und mit einem energieabgebenden Element (32), das sich am Boden (S) befindet, zusammenzuwirken, wobei die energieempfangende und - abgebende Elemente (28, 32) eine Vorrichtung zur Übertragung elektrischer Energie bilden, die, wenn sich das Flugzeug auf dem Boden (S) bewegt, eine Übertragung elektrischer Energie von dem energieabgebenden Element (32) zu dem energieempfangenden Abgeber (28) gestattet, **dadurch gekennzeichnet, dass** das energieempfangende Element (28) mindestens ein Rädchen (46) beinhaltet, das dazu konfiguriert ist, auf dem Boden (S) zu rollen und das Element in einem gegebenen Abstand zum Boden (S) zu halten.

2. Flugzeug nach Anspruch 1, **dadurch gekennzeichnet, dass** das energieempfangende Element (28) ein elektromagnetisches Induktionselement ist, das dazu konfiguriert ist, einen elektrischen Strom zu erzeugen, wenn es in einem Magnetfeld, das durch das energieabgebende Element (32) erzeugt wird, positioniert ist.

3. Flugzeug nach einem der vorhergehenden Ansprüche, **dadurch gekennzeichnet, dass** das Flugzeug mindestens ein Ausfahrsystem (34) beinhaltet, das dazu konfiguriert ist, das energieempfangende Element (28) zwischen einer ausgefahrenen Position, in der das energieempfangende Element (28) mit dem energieabgebenden Element (32) zusammenwirkt, und einer eingefahrenen Position, in der das energieempfangende Element (28) keine aerodynamischen Störungen erzeugt, wenn sich das Flugzeug im Flug befindet, zu bewegen.

4. Flugzeug nach dem vorhergehenden Anspruch, **dadurch gekennzeichnet, dass** das Ausfahrsystem (34) Folgendes umfasst: einen Mast (36), der ein erstes Ende (36.1), das über ein Gelenk (38) mit einem Teil des Flugzeugs (10), der zwischen einer ausgefahrenen und einer eingefahrenen Position beweglich ist, verbunden ist, und ein zweites Ende (36.2), das mit dem energieempfangenden Element (28) verbunden ist, aufweist, sowie mindestens einen Aktuator (40), der dazu konfiguriert ist, das energieempfangende Element (28) zwischen einer ersten und einer zweiten Position zu bewegen.

5. Flugzeug nach Anspruch 3, **dadurch gekennzeichnet, dass** das energieempfangende System (28) mit einem Teil des Flugzeugs (10), der zwischen einer ausgefahrenen und einer eingefahrenen Position beweglich ist, fest verbunden ist und mit Bezug auf diesen beweglichen Teil des Flugzeugs fest ist.

6. Flugzeug nach einem der vorhergehenden Ansprüche, **dadurch gekennzeichnet, dass** der elektrische Antrieb (26) im Bereich des Fahrwerks (16, 18) positioniert ist und von dem Rad (24, 24') getrennt ist und dass das Fahrwerk (16, 18) ein Kopplungssystem beinhaltet, welches das Rad (24, 24') und den elektrischen Antrieb (26) verbindet.

7. Flugzeug nach einem der Ansprüche 1 bis 5, **dadurch gekennzeichnet, dass** der elektrische Antrieb (26) in der Art eines Radnabenmotors in das Rad (24, 24') integriert ist.

## Claims

1. Aircraft comprising at least one landing gear (16, 18) having at least one wheel (24, 24') configured to roll on the ground (S) when the aircraft is moving on the ground (S), at least one electric drive system (26) configured to drive the wheel (24) in rotation and at least one energy receiving element (28) configured to power the electric drive system (26) and cooperate with an energy emitting element (32) present on the ground (S), the energy receiving and emitting elements (28, 32) forming an electrical energy transfer device allowing, when the aircraft is moving on the ground (S), a transfer of electrical energy from the energy emitting element (32) to the energy receiving element (28), **characterized in that** the energy receiving element (28) comprises at least one caster (46) configured to roll on the ground (S) and keep it at a given distance from the ground (S).

2. Aircraft according to Claim 1, **characterized in that** the energy receiving element (28) is an electromagnetic induction element configured to generate an electric current when it is positioned in a magnetic field generated by the energy emitting element (32).

3. Aircraft according to one of the preceding claims, **characterized in that** the aircraft comprises at least one deployment system (34) configured to move the energy receiving element (28) between a deployed position in which the energy receiving element (28) cooperates with the energy emitting element (32) and a retracted position in which the energy receiving element (28) does not generate aerodynamic disturbances when the aircraft is in flight.

4. Aircraft according to the preceding claim, **characterized in that** the deployment system (34) has a pylon (36) having a first end (36.1) connected by an articulation (38) to a part of the aircraft (10) that is able to move between deployed and retracted positions and a second end (36.2) connected to the energy receiving element (28) and at least one actuator (40) configured to move the energy receiving element (28) between first and second positions.

5. Aircraft according to Claim 3, **characterized in that** the energy receiving element (28) is as one with a part of the aircraft (10) that is able to move between deployed and retracted positions and fixed with respect to this mobile part of the aircraft.

6. Aircraft according to one of the preceding claims, **characterized in that** the electric drive system (26) is positioned at the landing gear (16, 18) and separate from the wheel (24, 24') and **in that** the landing gear (16, 18) comprises a coupling system connecting the wheel (24, 24') and the electric drive system (26).

7. Aircraft according to one of Claims 1 to 5, **characterized in that** the electric drive system (26) is integrated in the wheel (24, 24') in the manner of a wheel motor.
